# EUROPEAN PATENT APPLICATION

(11) **EP 1 195 226 A1**
(43) Date of publication of application: **10.04.2002**
(21) Application number: 00939093.1
(22) Date of filing: 16.06.2000
(51) Int. Cl.: B23Q 15/00, G05B 19/4093

(54) **METHOD OF PROCESSING DUPLICATE SUCH AS DENTAL PROSTHETIC APPLIANCE**

(30) Priority: 18.06.1999 JP 17330899
(71) Applicant: KABUSHIKI KAISYA ADVANCE, Chuo-ku Tokyo 103-8354 (JP)
(72) Inventor: SUGAI, Yasuhisa, Kabushiki Kaisya Advance, Chuo-ku, Tokyo 103-8354 (JP)
(74) Representative: von Hellfeld, Axel, Dr. Dipl.-Phys.
(86) International application number: JP0003976
(87) International publication number: WO0078503

(57) **Abstract**

A replica is obtained by dividing a lump of material to be machined into a plurality of machining regions, roughly machining every machining region to a shape which resembles, on is greater than, a target shape or which is an offset shape of a target shape, and finally machining the roughly machined regions to the target shape.

## Description

### TECHNICAL FIELD

The present invention relates to an apparatus for carrying out computer-controlled automatic measurement, and automatic machining based on this measurement information, and relates to a system for measuring and manufacturing a precise dental prosthesis, other dental members, medical members, various imitations and a workpiece which is identical, similar or equivalent to an object to be measured, by use of an automatic measuring and automatic machining means typified by a CAD/CAM device.

### BACKGROUND ART

In accordance with progress of a CAD/CAM, the manual operations of dental technicians are being mechanized. In a machining process, after a rough machining in which a workpiece is roughly machined into a shape which approximates to a target shape is carried out, a finish machining in which the workpiece is machined to the target shape is carried out. In other words, a finish machining is carried out after the rough machining is completed without dividing the machining region. In some cases, an intermediate machining process is provided between the rough machining and the finish machining.

The workpiece is first subject to the rough machining to obtain a shape approximating the target shape or an offset shape thereof and is thereafter subject to the finish machining to eliminate a difference from the target shape. In the rough machining, in general, a thick machining tool is used to machine the workpiece by a deep and wide cut at a large feed rate. Accordingly, a thin dental prosthesis such as an inlay could be broken during machining. Furthermore, in the finish machining, there is a possibility that the workpiece is broken due to a force applied thereto, or tends to be deflected if the workpiece is thin, thus resulting in imprecise machining. One solution to minimize breakage or deflection in the conventional methods is to reduce the cut depth as much as possible. However, this solution prolongs the machining time.

### SUMMARY OF THE INVENTION

The object of the present invention is to provide a method of machining a replica in which even a thin workpiece can be precisely machined.

A method of machining a replica according to the present invention comprises the steps of:
dividing a lump of material to be machined into a plurality of machining regions;
roughly machining each machining region to a shape which resembles to or is greater than a target shape or which is an offset shape of the target shape; and
finally machining the roughly machined regions to the target shape to obtain a replica;
thereby allowing machining of a small replica by minimizing the influence of the size of a machining jig and the operation of the machining jig.

When a thin member such as an inlay for a dental prosthesis is cut or ground, the workpiece is divided into a plurality of machining regions with respect to a holding portion adapted to hold the workpiece on a machining device.

Regarding the dividing method, it is possible to divide the workpiece into sector pieces, with respect to the point of action of the holding portion. However, from the view point of a processing of machining data, it is preferable that the workpiece be divided in a direction parallel to a tangential line to the holding portion. Among the divided machining regions, a machining region which is located far from the holding portion is roughly machined by a cutting or grinding tool. The rough cutting or grinding tool preferably has a diameter of 1mm to 6mm, but the diameter is not limited thereto. After the rough machining, a finish machining is carried out.

With regard to the number of divided machining regions, the larger the number, the longer the machining time, and the smaller the load on a lump of material during machining. On the contrary, as the number of the divided machining regions decreases, the machining time decreases and the load on the lump of material during machining increases. For example, 3 to 10 machining regions are appropriate since the machining time and the load on the lump of material can be reduced to small values. To this end, the width of each machining region is, for example, 1 to 10mm. This numerical value is given by way of example for a target replica whose length in the longitudinal direction is 5 to 20mm and for the lump of material whose size in the longitudinal direction before machining such as cutting, grinding, or the like is 8 to 30mm. The numerical value can be appropriately modified depending on the size of a replica or a lump of material.

It is preferable that the finish cutting or grinding tool has a diameter of 0.1 to 3mm, but the diameter is not limited thereto. Depending on the target shape to be machined, the rough cutting or grinding tool can be also used as the finish cutting or grinding tool. After one divided machining region is roughly and finally machined, a subsequent machining region is machined in the like manner. The lump of material is machined into a target shape by repeating these operations. If a plurality of holding portions are provided, it is preferable that the machining operation begins at a machining region which is located at a same distance from each holding portion and which is most distant from the holding portion. The number of the machining regions is two or more and represents the number obtained by dividing the length of the workpiece by the width of the cutting or grinding tool which is inserted in the divided machining region. In order to carry out three-dimensional machining, the workpiece may be rotated, moved or inclined for each divided machining region. The movements are appropriately selected in accordance with the target shape.

So long as the workpiece is divided into machining regions and is subject to rough and finish machining processes, the machining method, or the shape and material of the workpiece, are not limited to specific ones.

The two machining processes, i.e., the rough machining and the finish machining are not necessarily conducted in combination for the divided machining regions, in accordance with the object of a replica. If the replica requires, from the viewpoint of function, rough machining only, the finish machining can be dispensed with, or one or more divided machining regions can be skipped in spite of the machining order.

The division may be determined, in advance, in accordance with the size and shape of a lump of material, or may be appropriately determined in accordance with the shape determined from a model.

The expression "a shape which resembles, or is greater than, a target shape or which is an offset shape of a target shape" in the expression "each machining region is roughly machined to a shape which resembles, or is greater than, a target shape or which is an offset shape of a target shape" in the present invention refers, in concrete, to a shape which is left with a portion that must be removed by the finish machining because the roughly machined surface is still too rough to accept. In case of a dental prosthesis, the amount of removal is preferably 20µm to 300µm, but is not limited thereto.

The present invention provides at least data for machining, and the data is formed by numerical values, codes or symbols, etc., that can be calculated by a general-purpose signal processor such as a personal computer.

As a means for obtaining "data for machining", there can be used a means for forming a model to obtain a replica by coming into contact with the surface of the model and obtaining data of a displacement obtained by the contact, or a means for obtaining data by calculation from the shape of a portion to which a replica is applied, in a noncontact manner, by use of a laser, ultrasound or a stereo photograph, or a means for three-dimensionally creating data by use of CAD graphic software, or the like, on a personal computer.

If a model is obtained in advance, profiling machining in which a lump of material is machined by cutting, grinding, etc., while measuring the surface of the model may be carried out.

The word "machining" used in the present invention may include not only a cutting or grinding, etc., using a rotating drill whose side surface and tip are in contact with the lump of material, but also a surface machining using electrical discharge or laser.

A workpiece is divided into machining regions, and a space between the holding portion to mount the workpiece to the machining tool and the cutting or grinding tool is kept identical with the length of the workpiece. Consequently, no breakage or no deflection of the workpiece due to the cutting or grinding tool bearing against the workpiece occurs. The machining time can be decreased since the cutting or grinding depth can be slightly increased.

### BRIEF DESCRIPTION OF THE DRAWINGS

The present invention will become more clear from the following embodiment with reference to the drawings.
Fig. 1 is a schematic illustration of an apparatus used in the present invention;
Fig. 2 is a perspective view of a dental prosthesis block to be ground;
Fig. 3 is a view of a dental prosthesis block divided into a plurality of machining regions;
Fig. 4 is a view in which the grinding of a divided machining regions begins;
Fig. 5 is a view in which the grinding operation continues for the divided machining regions; and
Fig. 6 is a view of a ground inlay.

### BEST MODE FOR CARRYING OUT THE INVENTION

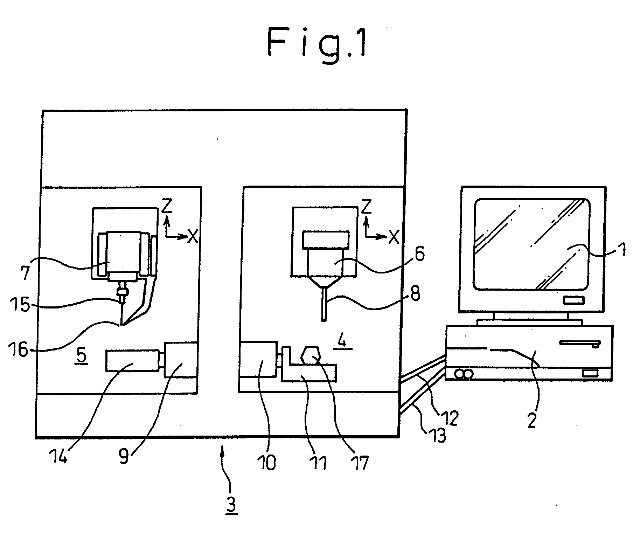

A dental prosthesis machining apparatus used in this embodiment is based on an NC machine tool used for machining molding dies. Because a general NC machine tool is not used to machine a small workpiece such as a dental prosthesis, but is used to machine a large workpiece, the machine tool itself is inevitably large. Therefore, an improved machine tool which can be advantageously used particularly for a small workpiece, such as a dental prosthesis, and which is provided with a three-dimensional shape measuring device is prepared. The improved NC machine tool is shown in Fig. 1.

The NC machine tool 3 in Fig. 1 is divided into a three-dimensional shape measuring section 4 and a three-dimensional machining section 5. A three-dimensional shape measuring probe 6 with a contact element 8 is provided in the three-dimensional shape measuring section 4. The three-dimensional shape measuring probe 6 is mounted on a X-, Y-, and Z-axes table, and can be three-dimensionally moved.

An AC servo motor with an encoder is used for driving each shaft. A spindle motor 7 is provided in the three-dimensional machining section 5. The spindle motor 7 can be three-dimensionally moved, like the three-dimensional shape measuring section 4. A grinding tool 15, such as a diamond bar, is driven by the spindle motor 7. A personal computer 2 is connected to the NC machine tool 3 to control the operation thereof. A CRT display 1 is connected to the personal computer 2. Numeral 12 represents a cable which sends three-dimensional shape measuring data to the personal computer 2. Numeral 13 represents a cable which sends data to control the NC machine tool.

A water supply nozzle 16 is further provided to cool the machining tool member and remove the chips produced by the machining. The three-dimensional machining section 5 is waterproofed. A jig 10 in the three-dimensional shape measuring section, on which a jig 11 having a measuring model (retainer tooth model)17 attached thereto is mounted and a jig 9 in the three-dimensional machining section 5, to which a workpiece (a ceramic block or a porcelain block) 14 is attached are connected to each other in the machine tool, so that the jig 9 can be rotated by the AC servo motor with an encoder to drive each shaft.

If a machining operation is carried out using the measured data without being processed, the workpiece 14 is machined into a shape corresponding to a mirror-reversed shape of the measuring model 17. Therefore, after the measured data on the personal computer 2 is mirror-reversed on the X-axis and the Y-axis, the data is sent to the NC machine tool to machine the workpiece.

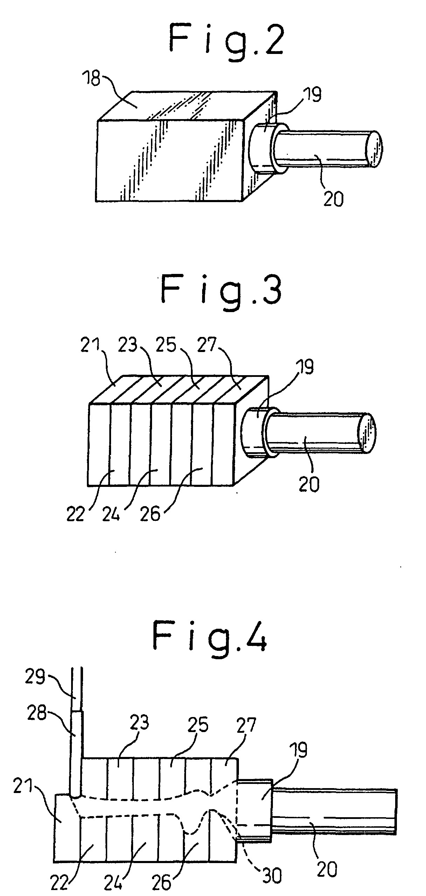

A block to grind an inlay of a dental prosthesis, as the workpiece 14, is shown in Fig. 2. This dental prosthesis block is composed of a machining portion 18, a holding portion 20 to attach the block to the above NC machine tool 3, and a holding portion stopper 19 as a positioning device. The holding portion 20 and the holding portion stopper 19 are integrally made of metal. The holding portion 18 is made of a material equivalent to porcelain which is commonly used in the dental art.

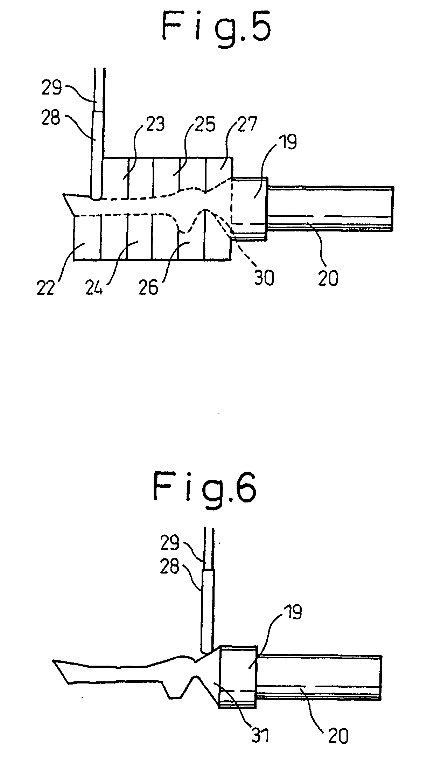

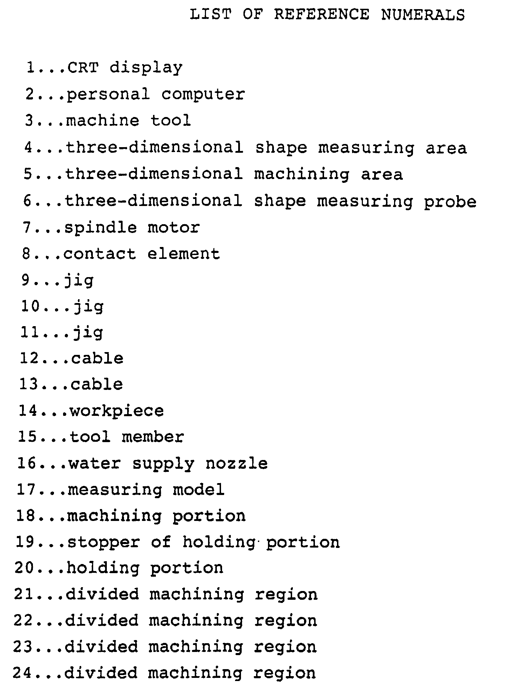

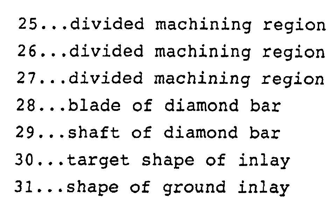

The divided machining regions of the dental prosthesis block are shown in Fig. 3. The divided machining regions 21, 22, 23, 24, 25 and 26 have each a width corresponding to a size of two diamond bar blades 28 which are used in grinding and have a diameter of 2mm. A machining operation is carried out from a machining region which is far most from the holding portion 20 for attachment to the NC machine tool 3, i.e., from the machining region 21 to the machining region 27, by use a diamond bar shaft 29 and the diamond bar blade 28. The machining region 21 ground to form an inlay is shown in Fig. 4. First, the machining region 21 is roughly machined by the diamond bar blade tip to form a occlusal surface side of the inlay, while leaving a machining allowance of 0.1mm with respect to a target shape, and then a finish machining is carried out by the same diamond bar. After that, the dental prosthesis block is inverted by 180 degrees and is ground at a retainer tooth surface side of the machining region 21, in the like manner. After the machining operation of the machining region 21 is completed, the machining region 22 is machined in the same way. This is shown in Fig. 5.

The rough machining and the finish machining are carried out from the machining region 21, which is far from the holding portion 20, toward the machining region 27, which is close to the holding portion, to complete the inlay of a target shape by the NC machine tool. Numeral 30 in Figs. 4 and 5 represents the target shape of the inlay. Numeral 31 in Fig. 6 represents a shape of the ground inlay.

The above-described embodiment has been discussed to show a concrete example of the present invention, but the present invention is not limited to this embodiment.

### INDUSTRIAL APPLICABILITY

The manufacturing of a dental prosthesis has been carried out by machining. However, a thin workpiece such as an inlay cannot be precisely machined at present. To eliminate this problem, in the present invention, a workpiece is divided into machining regions which are sequentially machined, one by one. Consequently, a more reliable mechanization of a dental operation can be obtained. Thus, a burden on a dental technician or a dentist can be reduced.

## Claims

1. A method of machining a replica, comprising the steps of:
dividing a lump of material to be machined into a plurality of machining regions;
roughly machining the lump of material at each machining region to a shape which resembles, or is greater than, a target shape or which is an offset shape of the target shape; and
finally machining the roughly machined regions to the target shape to obtain a replica.

2. A method of machining a replica according to claim 1, wherein the machining regions are sequentially machined from a divided machining region which is located distant from a holding portion for mounting the lump of material to be machined on a machining apparatus.

3. A method of machining a replica according to claim 1, wherein the lump of material to be machined is rotated, moved or inclined to machine the same.

4. A method of machining a replica according to claim 1, wherein said machining comprising the steps of:
based on shape data of a model obtained by measuring the shape of the model or preparing the shape data;
dividing the shape data of the model into a plurality of divided data corresponding to a plurality of spaces;
machining the corresponding portion of the lump of material, based on the respective data of said plurality of divided data, into a shape of a replica for each divided region; and
thereafter, shifting to subsequent divided data, and machining the portion of the lump of material corresponding to said divided data, into a shape of the replica in the divided region.

5. A method of machining a replica according to claim 1, wherein an obtained replica is a prosthesis to replace a missing part of a tooth.
